# EUROPEAN PATENT APPLICATION

(11) **EP 2 515 309 A1**
(43) Date of publication of application: **24.10.2012**
(21) Application number: 10837570.0
(22) Date of filing: 13.12.2010
(51) Int. Cl.: G21C 15/18

(54) **TRANSIENT ALLEVIATION SYSTEM OF REACTOR**

(30) Priority: 14.12.2009 JP 2009282856
(71) Applicant: Kabushiki Kaisha Toshiba, Minato-ku Tokyo 105-8001 (JP)
(72) Inventor: YANAGISAWA, Hiromasa, Tokyo 105-8001 (JP); KOJIMA, Yoshihiro, Tokyo 105-8001 (JP); KAMEI, Kazuhiro, Tokyo 105-8001 (JP); KASAHARA, Mitsuyoshi, Tokyo 105-8001 (JP)
(74) Representative: Kramer - Barske - Schmidtchen
(86) International application number: PCT/JP2010/072397
(87) International publication number: WO 2011/074544

(57) **Abstract**

A transient mitigation system for a reactor includes: a reactor core isolation cooling system; and a high pressure flooder system including a high pressure flooder pump and a flooder valve. When the water level of the reactor water in the reactor decreases to a first predetermined water level, the reactor core isolation cooling system is activated to supply the cooling water into the reactor. When the water level in the reactor decreases to the first predetermined water level, the high pressure flooder pump is activated. When the water level in the reactor decreases to a second predetermined water level lower than the first predetermined water level, the flooder valve is opened to inject the cooling water into the reactor.

## Description

### FIELD

Embodiments described herein relate to a reactor, and more particularly, to a transient mitigation system for a boiling water reactor.

### BACKGROUND

In case of a loss of coolant accident (LOCA), which extremely rarely happens, nuclear power plants include an emergency core cooling system (ECCS) that maintains a water level in a reactor pressure vessel at a safe water level.

The LOCA refers to an assumed event in which, during an output operation of a reactor, reactor coolant flows out due to breakage or damage of piping as part of a reactor coolant pressure boundary or devices related thereto, resulting in a decrease in cooling capacity of a reactor core. Such an accident is actually an extremely rare event. Here, in a normal operation of the reactor, the reactor coolant pressure boundary houses the reactor coolant, and has the same pressure conditions as those of the reactor. In an abnormal state, the reactor coolant pressure boundary forms a pressure barrier. The reactor coolant pressure boundary corresponds to facilities in the range of the loss of reactor coolant in case of its breakdown. Specifically, the reactor coolant pressure boundary includes: a reactor pressure vessel; accessories of the reactor pressure vessel, such as a control rod drive mechanism housing; devices and piping as part of a reactor coolant system (a reactor coolant recirculation system, a main steam system, and a feed-water system); and connection piping for these components.

In case of a LOCA, the ECCS cools reactor fuel to thereby maintain the soundness of fuel cladding, and maintains such a coolable configuration of the reactor core, in which heat removal from the reactor fuel can be estimated quantitatively or semiquantitatively, while removing decay heat generated in the reactor core.

Design principles for the ECCS involve: applying a single failure criterion to a device (active device) that actively fulfills predetermined functions in response to an external input; ensuring safety functions even in this state; and installing a plurality of emergency diesel power-generating facilities in case of loss of internal power supply and external power supply. The single failure refers to a failure in which one device loses a predetermined safety function due to a single cause, and the single failure includes multiple failures based on accompanying factors. In addition, the single failure criterion refers to a design in which safety functions of a system including a device are not impaired even if the assumption of a single failure of this device is applied.

Here, an advanced boiling water reactor (ABWR) is exemplified as the latest one of conventional boiling water reactors (BWRs). An ECCS of the ABWR includes three divisions, that is, a division 1, a division 2, and a division 3. The division 1 includes a one-system low pressure flooder system (LPFL) and a one-system reactor core isolation cooling system (RCIC). The division 2 includes a one-system LPFL and a one-system high pressure core flooder system (HPCF). The division 3 includes a one-system LPFL and a one-system HPCF.

The LPFL includes an electric low pressure flooder pump, and the HPCF includes an electric high pressure flooder pump. In case of loss of internal power supply and external power supply, each electric pump is connected to an emergency diesel generator for each division. The RCIC includes: a steam turbine driven by steam generated by the reactor; and a flooder pump connected to the steam turbine.

Then, a known ECCS for the pursuit of further safety can deal with online maintenance in addition to the application of the single failure criterion (see, for example, Patent Documents 1 and 2).

In addition to "accidents" including the LOCA, an "abnormal transient change during the reactor operation" is exemplified as events to be subjected to safety evaluation of a nuclear power plant.

The RCIC also serves as a system having a function of supplying the reactor coolant at the time of a decrease in the water level in the reactor pressure vessel, in such a reactor transient event as described above (in the case where some sort of abnormality occurs in a system that cools the reactor core). If the water level in the reactor pressure vessel decreases due to the reactor transient event and if a reactor water level low signal (water level 2) is detected by a reactor water level detection apparatus, the RCIC activates the flooder pump to supply the reactor coolant into the reactor pressure vessel, and thus recovers the water level in the reactor pressure vessel to a predetermined water level (water level 1.5) or more.

Note that the following transient mitigation system for a reactor is known (see, for example, Patent Document 3). In the case where the flooder pump of the RCIC cannot be activated, if the reactor water level detection apparatus detects a reactor water level low signal (water level 1.5), the HPCF is activated to supply the reactor coolant into the reactor pressure vessel, and the water level in the reactor pressure vessel is thus recovered to a predetermined water level (water level 1) or more.

### Citation List

### Patent Documents

Patent Document 1: Japanese Patent Laid-Open Publication No. 2009-31079
Patent Document 2: Japanese Patent Laid-Open Publication No. 2008-281426
Patent Document 3: Japanese Patent Laid-Open Publication No. 07-128481

### Disclosure of the Invention

### Problems to be Solved by the Invention

The ECCS disclosed in each of Patent Document 1 and Patent Document 2 adopts the online maintenance in addition to the application of the single failure criterion for the LOCA, to thereby secure a cooling function of the reactor core. Specifically, the ECCS disclosed in Patent Document 1 includes a HPCF in place of a RCIC. The ECCS disclosed in Patent Document 2 includes an isolation condenser (IC) in addition to the ECCS disclosed in Patent Document 1.

Unfortunately, function assignment for a reactor transient event is not considered in the ECCS disclosed in each of Patent Document 1 and Patent Document 2.

In the transient mitigation system for a reactor disclosed in Patent Document 3, in the case where a LOCA and a breakdown of the RCIC occur at the same time, the HPCF is activated for backup after the elapse of an appropriate time from detection of the breakdown of the RCIC.

Unfortunately, a rate of decrease in the water level in the reactor pressure vessel in a reactor transient event depends on heat output and decay heat of the reactor core, and hence the transient mitigation system for a reactor disclosed in Patent Document 3 has such a problem to be solved that a delay time until the activation of the HPCF needs to be reconsidered in accordance with a change in operation heat output.

In view of the above, the present invention has an object to provide a transient mitigation system for a reactor that can keep, in a reactor transient event, the inside of a reactor pressure vessel at a safe water level to thereby reliably cool a reactor core.

### Summary of the Inventions

In order to solve the above-mentioned problems, a transient mitigation system for a reactor according to the present invention includes: a reactor core isolation cooling system that is activated to supply cooling water into the reactor when a water level in the reactor decreases to a first predetermined water level; and a high pressure flooder system including: a high pressure flooder pump that is activated when the water level in the reactor decreases to the first predetermined water level; and a flooder valve that is opened to inject cooling water into the reactor when the water level in the reactor decreases to a second predetermined water level lower than the first predetermined water level.

In a preferred embodiment of the transient mitigation system having the above-mentioned features, the high pressure flooder system may stop the high pressure flooder pump when the water level in the reactor recovers to a water level higher than the first predetermined water level.

Alternatively, a transient mitigation system for a reactor according to the present invention includes a first high pressure flooder system that is activated to inject cooling water into the reactor when a water level in the reactor decreases to a first predetermined water level.

In a preferred embodiment of the transient mitigation system having the above-mentioned features, the transient mitigation system for a reactor may include a first high pressure flooder system that is activated to inject cooling water into the reactor when a water level in the reactor decreases to a first predetermined water level.

The transient mitigation system for a reactor may further include a second high pressure flooder system including: a high pressure flooder pump that is activated when the water level in the reactor decreases to the first predetermined water level; and a flooder valve that is opened to inject cooling water into the reactor when the water level in the reactor decreases to a second predetermined water level lower than the first predetermined water level.

The transient mitigation system for a reactor may further include: a timer that starts timing when the water level in the reactor decreases to the first predetermined water level; and a second high pressure flooder system that is activated to inject cooling water into the reactor when the timer detects an elapse of a predetermined time during the timing.

The transient mitigation system for a reactor may further include: a timer that starts timing when the activation of the first high pressure flooder system is failed; and a second high pressure flooder system that is activated to inject cooling water into the reactor when the timer detects an elapse of a predetermined time during the timing.

The transient mitigation system for a reactor may further include an isolation condenser that takes steam out of the reactor, condenses the steam, and injects the condensed water into the reactor, when the reactor is isolated. The first high pressure flooder system may stand by, if the isolation condenser is activated, for a start of the water injection until the water level in the reactor decreases to a second predetermined water level lower than the first predetermined water level.

The transient mitigation system for a reactor may further include an isolation condenser that takes steam out of the reactor, condenses the steam, and injects the condensed water into the reactor, when the reactor is isolated. The first high pressure flooder system may remain in a stop state thereof if the isolation condenser is activated.

### Advantage of the Invention

According to the present invention, there is provided a transient mitigation system for a reactor that can keep, in a reactor transient event, the inside of a reactor pressure vessel at a safe water level to thereby reliably cool a reactor core.

### BRIEF DESCRIPTION OF THE DRAWINGS

[Fig.1] Fig. 1 is a system diagram schematically illustrating an advanced boiling water reactor (ABWR) including a first embodiment of a transient mitigation system for a reactor according to the present invention.
[Fig.2] Fig. 2 is a diagram for describing an emergency core cooling system (ECCS) network of the ABWR including the first embodiment of the transient mitigation system for a reactor according to the present invention.
[Fig.3] Fig. 3 is a system diagram schematically illustrating the first embodiment of the transient mitigation system for a reactor according to the present invention.
[Fig.4] Fig. 4 is a system diagram schematically illustrating an ABWR including a second embodiment of the transient mitigation system for a reactor according to the present invention.
[Fig.5] Fig. 5 is a diagram for describing an ECCS network of the ABWR including the second embodiment of the transient mitigation system for a reactor according to the present invention.
[Fig.6] Fig. 6 is a system diagram schematically illustrating the second embodiment of the transient mitigation system for a reactor according to the present invention.
[Fig.7] Fig. 7 is a system diagram schematically illustrating a third embodiment of the transient mitigation system for a reactor according to the present invention.
[Fig.8] Fig. 8 is a system diagram schematically illustrating a fourth embodiment of the transient mitigation system for a reactor according to the present invention.
[Fig.9] Fig. 9 is a system diagram schematically illustrating a fifth embodiment of the transient mitigation system for a reactor according to the present invention.
[Fig.10] Fig. 10 is a system diagram schematically illustrating a sixth embodiment of the transient mitigation system for a reactor according to the present invention.
[Fig.11] Fig. 11 is a diagram for describing an ECCS network of an ABWR including the sixth embodiment of the transient mitigation system for a reactor according to the present invention.
[Fig.12] Fig. 12 is a system diagram schematically illustrating a seventh embodiment of the transient mitigation system for a reactor according to the present invention.

### DETAILED DESCRIPTION

A transient mitigation system for a reactor according to the present invention is described with reference to the attached drawings.

### [First Embodiment]

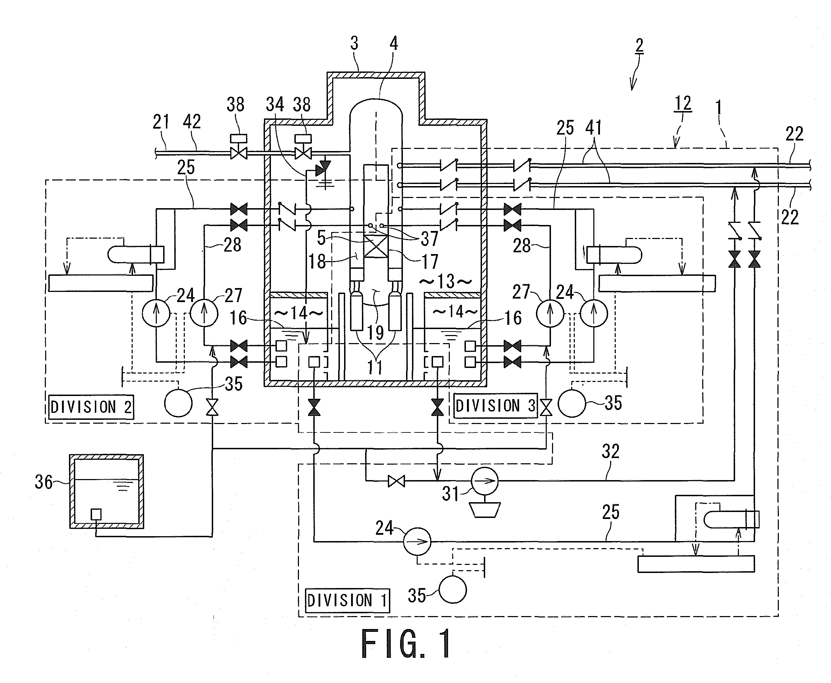

A first embodiment of the transient mitigation system for a reactor according to the present invention is described with reference to Fig. 1 to Fig. 3.

Fig. 1 is a system diagram schematically illustrating an advanced boiling water reactor (ABWR) including the first embodiment of the transient mitigation system for a reactor according to the present invention.

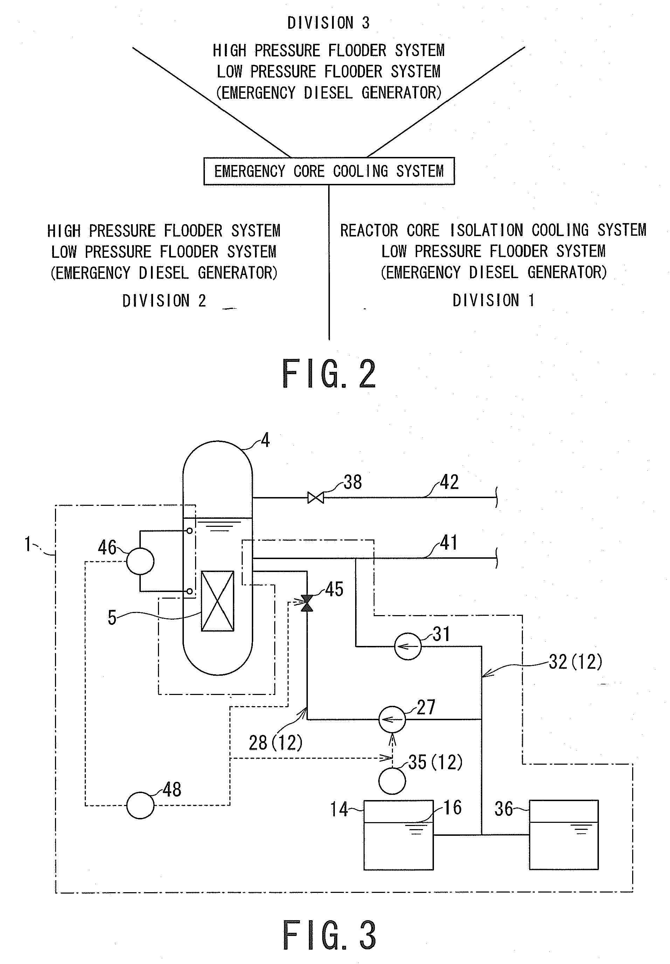

Fig. 2 is a diagram for describing an emergency core cooling system (ECCS) network of the ABWR including the first embodiment of the transient mitigation system for a reactor according to the present invention

As illustrated in Fig. 1 and Fig. 2, an ABWR 2 including a transient mitigation system 1 for a reactor according to the present embodiment (hereinafter, simply referred to as "transient mitigation system 1") includes: a reactor containment vessel (PCV) 3; a reactor pressure vessel 4 (reactor) contained in the PCV 3; a reactor core 5 housed in the reactor pressure vessel 4; a coolant recirculation pump 11 that circulates reactor water (cooling water) in the reactor pressure vessel 4; and an ECCS 12 that maintains the reactor water in the reactor pressure vessel 4 at a safe water level if a loss of coolant accident (LOCA) should happen.

The PCV 3 contains the reactor pressure vessel 4 and a cylindrical support pedestal (omitted from the drawings) that supports the reactor pressure vessel 4. The PCV 3 includes: a cylindrical dry well 13 that surrounds the reactor pressure vessel 4; and a cylindrical pressure suppression chamber 14 placed around the support pedestal. The pressure suppression chamber 14 includes a pressure suppression pool 16 that serves as a reservoir of the cooling water.

The reactor core 5 is covered by a reactor core shroud 17. Fuel rods (omitted from the drawings) are loaded in the reactor core 5.

The reactor pressure vessel 4 and the core shroud 17 define a ring-like or sleeve-like downcomer 18 inside of the reactor pressure vessel 4, and define a reactor core lower plenum 19 below the reactor core 5.

The coolant recirculation pump 11 is located below the downcomer 18. The coolant recirculation pump 11 guides the reactor water that flows down from the downcomer 18, to the reactor core lower plenum 19. The reactor core lower plenum 19 inverts the reactor water guided by the coolant recirculation pump 11, and guides the reactor water to the reactor core 5.

The reactor water guided to the reactor core 5 absorbs heat generated by nuclear fission reaction while passing through the reactor core 5, thus becomes a gas-liquid two-phase flow, and reaches a reactor core upper plenum (omitted from the drawings) defined above the reactor core 5. Subsequently, the gas-liquid two-phase flow is guided to a steam separator (omitted from the drawings) placed above the reactor core 5, and is separated into gas and liquid. The liquid part after the separation into gas and liquid falls in drops in the reactor pressure vessel 4, and reaches the downcomer 18. Meanwhile, the steam part obtained by the steam separator passes through a steam dryer (omitted from the drawings) to be dried, and becomes dry superheated steam. The superheated steam passes through a main steam system 21, is guided to a steam turbine (omitted from the drawings), and turns a steam turbine. The turning of the steam turbine causes a power generator (omitted from the drawings) to generate power. Note that four main steam systems 21 are actually provided, but three systems thereof are omitted from Fig. 1.

The steam that has turned the steam turbine is guided to a condenser (omitted from the drawings), and is cooled by the condenser to become condensate. The condensate passes through a reactor condensate/feed-water system 22, returns into the reactor pressure vessel 4, and mixes with the reactor water in the reactor pressure vessel 4.

The ECCS 12 deals with a LOCA. The ECCS 12 includes: a three-system low pressure flooder system (LPFL) 25 including electric LPFL pumps 24; a two-system high pressure core flooder system (HPCF) 28 (high pressure flooder system) including electric HPCF pumps 27; a one-system reactor core isolation cooling system (RCIC) 32 including a turbine-driven RCIC pump 31; and an automatic depressurization system 34.

The ECCS 12 also includes three divisions, that is, a division 1, a division 2, and a division 3. The division 1 includes: one system in the three-system LPFL 25; and the one-system RCIC 32. The division 2 includes: another system in the three-system LPFL 25; and one system in the two-system HPCF 28. The division 3 includes: the other system in the three-system LPFL 25; and the other system in the two-system HPCF 28. The electric pumps 24 and 27 are each connected to an emergency diesel generator 35 provided for each division, in case of loss of internal power supply and external power supply.

Note that the HPCF 28, the RCIC 32, and the emergency diesel generators 35 of the ECCS 12 also function as part of the transient mitigation system 1 that deals with a reactor transient event.

The LPFL 25 utilizes a low pressure water injection mode as one of operation modes of a residual heat removal system (omitted from the drawings). In addition, the LPFL 25 absorbs pool water (cooling water) in the pressure suppression pool 16, to thereby inject the water to the outer side of the reactor core shroud 17. The LPFL 25 includes independent three systems. Further, the LPFL 25 is automatically activated at reactor water level LOW (level 1) or in response to a pressure high signal of the dry well 13 of the PCV 3. Accordingly, if the pressure in the reactor pressure vessel 4 decreases, the LPFL 25 can inject the pool water in the pressure suppression pool 16 into the reactor pressure vessel 4.

The HPCF 28 initially absorbs water from a condensate storage tank 36 as a first water source, and finally absorbs water from the pressure suppression pool 16 as a second water source, to thereby inject the water to the inner side of the core shroud 17. The HPCF 28 includes independent two systems. In addition, the HPCF 28 injects water to a fuel assembly from a sparger nozzle 37 provided above the reactor core 5, to thereby cool the reactor core 5. The HPCF 28 is automatically activated at reactor water level LOW (level 1.5) or in response to the pressure high signal of the dry well 13 of the PCV 3, and is automatically stopped at reactor water level HIGH (level 8). That is, the HPCF 28 is activated prior to the LPFL 25 that is activated at the reactor water level LOW (level 1), as a backup of the RCIC 32 that is supposed to be activated at reactor water level LOW (level 2) in a LOCA or the like.

The RCIC 32 supplies the cooling water into the reactor pressure vessel 4 to cool the reactor core 5, even if a main steam isolation valve 38 is closed to isolate the reactor pressure vessel 4 in a reactor transient event or a LOCA. In addition, the RCIC 32 actuates its pump by means of the turbine driven by the steam in the reactor pressure vessel 4. Further, the RCIC 32 initially absorbs water from the condensate storage tank 36, and finally absorbs water from the pressure suppression pool 16, to thereby inject the water to the outer side of the reactor core shroud 17 through a feed-water pipe 41 of the reactor condensate/feed-water system 22. The RCIC 32 is automatically activated at the reactor water level LOW (level 2) or in response to the pressure high signal of the dry well 13 of the PCV 3, and is automatically stopped at the reactor water level HIGH (level 8).

The automatic depressurization system 34 releases the steam in the reactor pressure vessel 4 to the pressure suppression chamber 14, and reduces, for urging early water injection, the pressure in the reactor pressure vessel 4 to a pressure that allows the water injection of the LPFL 25. In addition, the automatic depressurization system 34 is configured by part of safety relief valves attached to a main steam pipe 42 of the main steam system 21. The automatic depressurization system 34 is actuated after the elapse of a predetermined time from reception of both of the reactor water level LOW (level 1) and the pressure high signal of the dry well 13 of the PCV 3.

The emergency diesel generator 35 that belongs to each division feeds power to the electric pumps that belong to the same division, in order to achieve safety functions of the ECCS 12 even if the assumption of a single failure of each device constituting the ECCS 12 is applied or even if the external power supply cannot be utilized.

Fig. 3 is a system diagram schematically illustrating the first embodiment of the transient mitigation system for a reactor according to the present invention.

As illustrated in Fig. 3, the transient mitigation system 1 deals with a reactor transient event using the HPCF 28, the RCIC 32, and the emergency diesel generator 35 of the ECCS 12, and maintains the water level of the reactor water (cooling water) in the reactor pressure vessel 4.

The transient mitigation system 1 includes: the RCIC 32; and the HPCF 28 including the HPCF pump 27 and a flooder valve 45. When the water level of the reactor water in the reactor pressure vessel 4 decreases to the reactor water level LOW (level 2, a first predetermined water level), the RCIC 32 is activated to supply the cooling water into the reactor pressure vessel 4. When the water level in the reactor pressure vessel 4 decreases to the reactor water level LOW (level 2), the HPCF pump 27 is activated. When the water level in the reactor pressure vessel 4 decreases to the reactor water level LOW (level 1.5, a second predetermined water level) lower than the reactor water level LOW (level 2), the flooder valve 45 is opened to inject the cooling water into the reactor pressure vessel 4.

The transient mitigation system 1 also includes: a water level gauge 46; a transient mitigation control device 48; and the emergency diesel generator 35 connected to the electric HPCF pump 27. The water level gauge 46 is provided to the reactor pressure vessel 4, and measures the water level of the reactor water in the reactor pressure vessel 4 to output a water level signal. The transient mitigation control device 48 receives the water level signal outputted by the water level gauge 46. Then, on the basis of the water level signal, the transient mitigation control device 48 controls opening and closing of the flooder valve 45 of the HPCF 28, and activates or stops the HPCF pump 27.

The flooder valve 45 of the HPCF 28 is a normally closed on/off valve, and serves to control whether or not to inject the cooling water fed by the HPCF pump 27 into the reactor pressure vessel 4.

The water level gauge 46 measures the water level of the reactor water in the reactor pressure vessel 4, and outputs the water level signal to the transient mitigation control device 48. In addition, the water level gauge 46 can measure at least the reactor water level LOW (level 2) and the reactor water level LOW (level 1.5) lower than the reactor water level LOW (level 2). Note that the water level signal of the water level gauge 46 may also function as a start signal for activating or stopping each of the LPFL 25, the HPCF 28, and the RCIC 32 of the ECCS 12.

The transient mitigation control device 48 periodically reads the water level signal outputted by the water level gauge 46, and controls the transient mitigation system 1 in accordance with a change in the water level of the reactor water in the reactor pressure vessel 4. Specifically, when the water level of the reactor water in the reactor pressure vessel 4 decreases to the reactor water level LOW (level 2), the transient mitigation control device 48 activates the HPCF pump 27. In addition, when the water level of the reactor water in the reactor pressure vessel 4 decreases to the reactor water level LOW (level 1.5), the transient mitigation control device 48 opens the flooder valve 45 to inject the cooling water into the reactor pressure vessel 4. Further, when the water level of the reactor water in the reactor pressure vessel 4 recovers to the reactor water level LOW (level 2), the transient mitigation control portion 48 stops the HPCF pump 27, and closes the flooder valve 45.

Note that the transient mitigation control device 48 monitors a change in the water level signal outputted by the water level gauge 46, to thereby determine whether or not the water level of the reactor water in the reactor pressure vessel 4 decreases to the reactor water level LOW (level 2) or the reactor water level LOW (level 1.5) and determine whether or not the water level of the reactor water in the reactor pressure vessel 4 recovers to the reactor water level LOW (level 2).

The transient mitigation system 1 thus configured activates the HPCF pump 27 at the reactor water level LOW (level 2), as a backup of the RCIC 32 that is supposed to be activated at the reactor water level LOW (level 2) in a reactor transient event. Then, in the case where the activation of the RCIC 32 is failed and where the water level of the reactor water in the reactor pressure vessel 4 further decreases to reach the reactor water level LOW (level 1.5), the transient mitigation system 1 opens the flooder valve 45 to cause the HPCF 28 to inject water into the reactor pressure vessel 4, and thus recovers the water level of the reactor water in the reactor pressure vessel 4.

Accordingly, in the transient mitigation system 1 according to the present embodiment, even if the activation of the RCIC 32 is failed due to some sort of breakdown or the like, when the water level of the reactor water in the reactor pressure vessel 4 becomes the reactor water level LOW (level 1.5), the HPCF 28 injects water into the reactor pressure vessel 4. Hence, the water level in the reactor pressure vessel 4 is maintained at a water level higher than the reactor water level LOW (level 1), and the safety of the ABWR 2 is thus enhanced, so that the reactor transient event can be dealt with.

In addition, in the transient mitigation system 1 according to the present embodiment, when the water level of the reactor water in the reactor pressure vessel 4 becomes the reactor water level LOW (level 1.5), the HPCF 28 injects water into the reactor pressure vessel 4. Hence, a delay time until the activation of the HPCF 28 (a delay time from the activation failure of the RCIC 32) does not need to be reconsidered in accordance with a change in operation heat output of the ABWR 2.

Further, in the transient mitigation system 1 according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Second Embodiment]

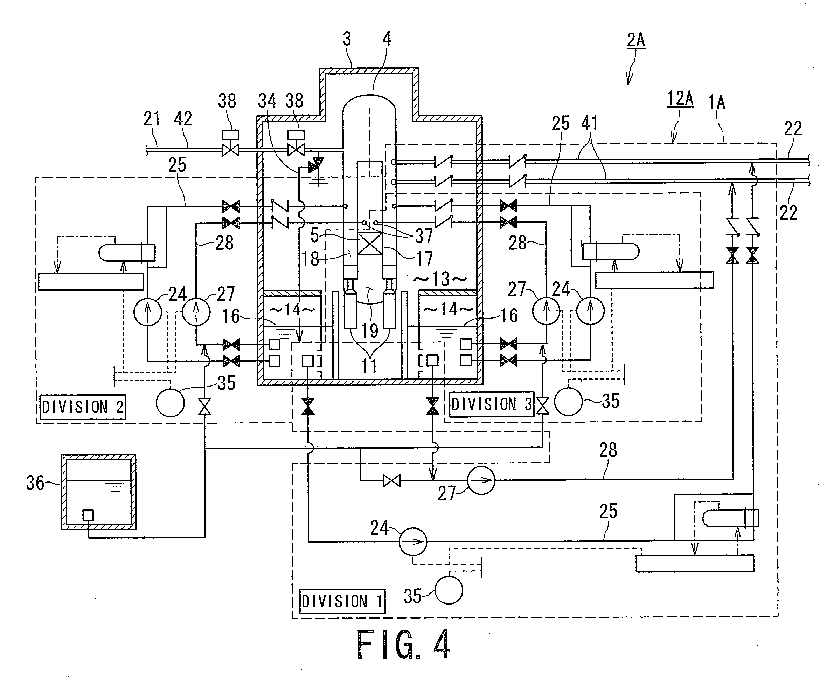

A second embodiment of the transient mitigation system for a reactor according to the present invention is described with reference to Fig. 4 to Fig. 6.

Fig. 4 is a system diagram schematically illustrating an ABWR including the second embodiment of the transient mitigation system for a reactor according to the present invention.

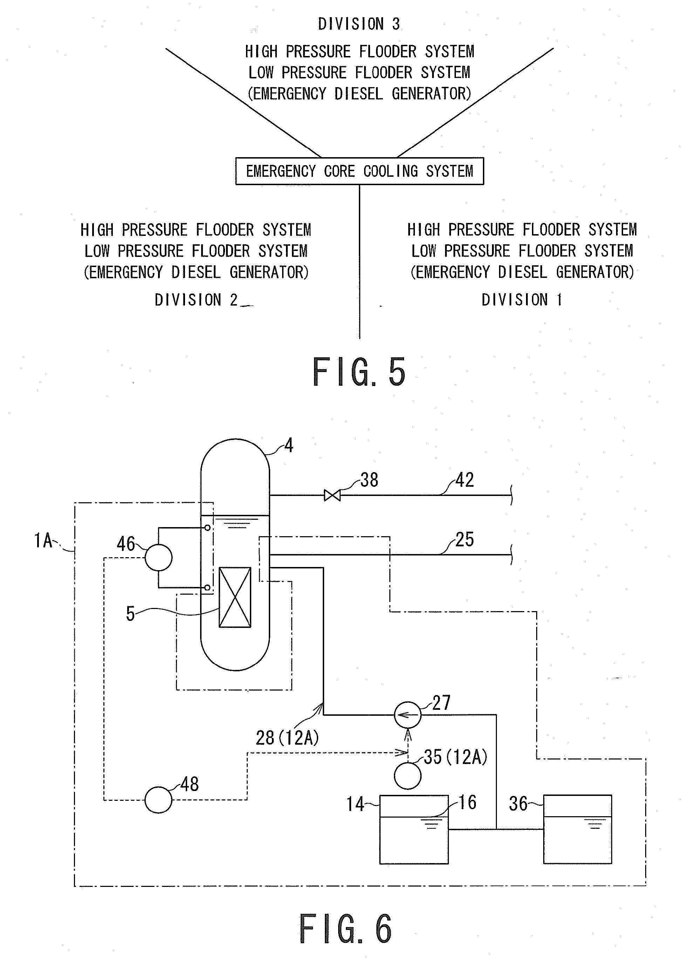

Fig. 5 is a diagram for describing an ECCS network of the ABWR including the second embodiment of the transient mitigation system for a reactor according to the present invention.

Note that, in a transient mitigation system 1A for a reactor according to the present embodiment, the same components as those of the transient mitigation system 1 for a reactor according to the first embodiment are denoted by the same reference symbols, and redundant description is omitted.

As illustrated in Fig. 4 and Fig. 5, an ABWR 2A including the transient mitigation system 1A for a reactor according to the present embodiment (hereinafter, simply referred to as "transient mitigation system 1A") includes an ECCS 12A that maintains the reactor water (cooling water) in the reactor pressure vessel 4 at a safe water level if a LOCA should happen.

The ECCS 12A includes: the three-system LPFL 25 including the electric LPFL pumps 24; a three-system HPCF 28 (first high pressure flooder system) including the electric HPCF pumps 27; and the automatic depressurization system 34. That is, the ECCS 12A includes the HPCF 28 in place of the RCIC 32 that belongs to the division 1 of the ECCS 12.

Fig. 6 is a system diagram schematically illustrating the second embodiment of the transient mitigation system for a reactor according to the present invention.

As illustrated in Fig. 6, the transient mitigation system 1A deals with a reactor transient event using the HPCF 28 and the emergency diesel generator 35 of the ECCS 12A, and maintains the water level of the reactor water in the reactor pressure vessel 4. The transient mitigation system 1A includes the HPCF 28. When the water level of the reactor water in the reactor pressure vessel 4 decreases to the reactor water level LOW (level 2), the HPCF 28 is activated to inject the cooling water into the reactor pressure vessel 4.

Note that the HPCF 28 of the transient mitigation system 1A may be the HPCF 28 that belongs to any of the divisions (any one of the division 1, the division 2, and the division 3) of the ECCS 12A.

If the water level of the reactor water in the reactor pressure vessel 4 decreases to reach the reactor water level LOW (level 2) in a reactor transient event, the transient mitigation system 1A thus configured activates the HPCF pump 27 to cause the HPCF 28 to inject water into the reactor pressure vessel 4, and thus recovers the water level of the reactor water in the reactor pressure vessel 4.

Accordingly, in the transient mitigation system 1A according to the present embodiment, when the water level of the reactor water in the reactor pressure vessel 4 decreases to the reactor water level LOW (level 2), the HPCF 28 injects water into the reactor pressure vessel 4. Hence, the water level in the reactor pressure vessel 4 is maintained at a water level higher than the reactor water level LOW (level 1.5), and the safety of the ABWR 2A is thus enhanced, so that the reactor transient event can be dealt with.

In addition, in the transient mitigation system 1A according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Third Embodiment]

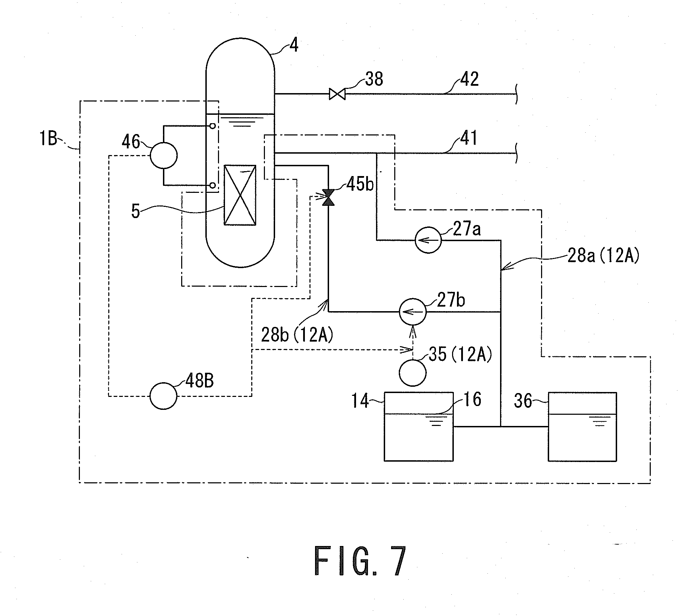

A third embodiment of the transient mitigation system for a reactor according to the present invention is described with reference to Fig. 7.

Fig. 7 is a system diagram schematically illustrating the third embodiment of the transient mitigation system for a reactor according to the present invention.

Note that, in a transient mitigation system 1B for a reactor according to the present embodiment, the same components as those of the transient mitigation system 1A for a reactor according to the second embodiment are denoted by the same reference symbols, and redundant description is omitted.

As illustrated in Fig. 7, the transient mitigation system 1B for a reactor according to the present embodiment (hereinafter, simply referred to as "transient mitigation system 1B") deals with a reactor transient event using the HPCF 28 and the emergency diesel generator 35 of the ECCS 12A, and maintains the water level of the reactor water (cooling water) in the reactor pressure vessel 4. The transient mitigation system 1B includes: a HPCF 28a (first high pressure flooder system); and a HPCF 28b (second high pressure flooder system) including a HPCF pump 27b and a flooder valve 45b. When the water level of the reactor water in the reactor pressure vessel 4 decreases to the reactor water level LOW (level 2), the HPCF 28a is activated to inject the cooling water into the reactor pressure vessel 4. When the water level in the reactor pressure vessel 4 decreases to the reactor water level LOW (level 2), the HPCF pump 27b is activated. When the water level in the reactor pressure vessel 4 decreases to the reactor water level LOW (level 1.5) lower than the reactor water level LOW (level 2), the flooder valve 45b is opened to inject the cooling water into the reactor pressure vessel 4.

The transient mitigation system 1B also includes: the water level gauge 46; a transient mitigation control device 48B; and the emergency diesel generator 35. The transient mitigation control device 48B receives the water level signal outputted by the water level gauge 46. Then, on the basis of the water level signal, the transient mitigation control device 48B controls opening and closing of the flooder valve 45b of the HPCF 28b, and activates or stops the HPCF pump 27b.

Note that the HPCF 28a and the HPCF 28b of the transient mitigation system 1B are defined by assigning portions of the HPCF 28 in two divisions (any two of the division 1, the division 2, and the division 3) selected in advance from the ECCS 12A. In addition, the HPCF 28b may be defined as a two-system HPCF 28 additionally including a portion of the HPCF 28 in the other division of the ECCS 12A.

The transient mitigation control device 48B periodically reads the water level signal outputted by the water level gauge 46, and controls the transient mitigation system 1B in accordance with a change in the water level of the reactor water in the reactor pressure vessel 4. Specifically, when the water level of the reactor water in the reactor pressure vessel 4 decreases to the reactor water level LOW (level 2), the transient mitigation control device 48B activates the HPCF pump 27b. In addition, when the water level of the reactor water in the reactor pressure vessel 4 decreases to the reactor water level LOW (level 1.5), the transient mitigation control device 48B opens the flooder valve 45b to inject the cooling water into the reactor pressure vessel 4. Further, when the water level of the reactor water in the reactor pressure vessel 4 recovers to the reactor water level LOW (level 2), the transient mitigation control device 48B stops the HPCF pump 27b, and closes the flooder valve 45b.

The transient mitigation system 1B thus configured activates the HPCF pump 27b at the reactor water level LOW (level 2), as a backup of the HPCF 28a that is supposed to be activated at the reactor water level LOW (level 2) in a reactor transient event. Then, in the case where the activation of the HPCF 28a is failed and where the water level of the reactor water in the reactor pressure vessel 4 further decreases to reach the reactor water level LOW (level 1.5), the transient mitigation system 1 B opens the flooder valve 45b to cause the HPCF 28b to inject water into the reactor pressure vessel 4, and thus recovers the water level of the reactor water in the reactor pressure vessel 4.

Accordingly, in the transient mitigation system 1B according to the present embodiment, even if the activation of the HPCF 28a is failed due to some sort of breakdown or the like, when the water level of the reactor water in the reactor pressure vessel 4 decreases to the reactor water level LOW (level 1.5), the HPCF 28b injects water into the reactor pressure vessel 4. Hence, the water level in the reactor pressure vessel 4 is maintained at a water level higher than the reactor water level LOW (level 1), and the safety of the ABWR 2A is thus enhanced, so that the reactor transient event can be dealt with.

In addition, in the transient mitigation system 1B according to the present embodiment, when the water level of the reactor water in the reactor pressure vessel 4 becomes the reactor water level LOW (level 1.5), the HPCF 28b injects water into the reactor pressure vessel 4. Hence, a delay time until the activation of the HPCF 28b (a delay time from the activation failure of the HPCF 28a) does not need to be reconsidered in accordance with a change in operation heat output of the ABWR 2A.

Further, in the transient mitigation system 1B according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Fourth Embodiment]

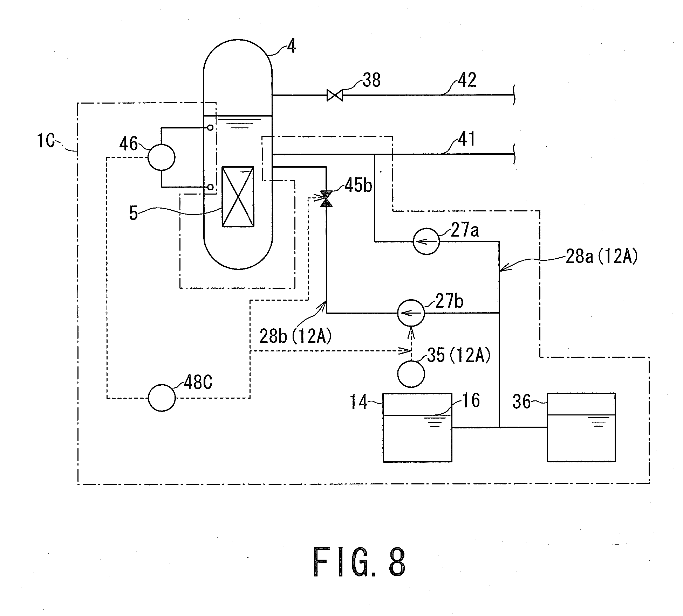

A fourth embodiment of the transient mitigation system for a reactor according to the present invention is described with reference to Fig. 8.

Fig. 8 is a system diagram schematically illustrating the fourth embodiment of the transient mitigation system for a reactor according to the present invention.

Note that, in a transient mitigation system 1C for a reactor according to the present embodiment, the same components as those of the transient mitigation system 1A for a reactor according to the second embodiment are denoted by the same reference symbols, and redundant description is omitted.

As illustrated in Fig. 8, the transient mitigation system 1C for a reactor according to the present embodiment (hereinafter, simply referred to as "transient mitigation system 1C") deals with a reactor transient event using the HPCF 28 and the emergency diesel generator 35 of the ECCS 12A, and maintains the water level of the reactor water (cooling water) in the reactor pressure vessel 4.

The transient mitigation system 1C includes: the HPCF 28a (first high pressure flooder system); a transient mitigation control device 48C (timer); and the HPCF 28b (second high pressure flooder system). When the water level of the reactor water in the reactor pressure vessel 4 decreases to the reactor water level LOW (level 2), the HPCF 28a is activated to inject the cooling water into the reactor pressure vessel 4. When the water level in the reactor pressure vessel 4 decreases to the reactor water level LOW (level 2), the transient mitigation control device 48C starts timing. When the transient mitigation control device 48C detects the elapse of a predetermined time during the timing, the HPCF 28b is activated to inject the cooling water into the reactor pressure vessel 4.

Note that the HPCF 28a and the HPCF 28b of the transient mitigation system 1C are defined by assigning portions of the HPCF 28 in two divisions (any two of the division 1, the division 2, and the division 3) selected in advance from the ECCS 12A. In addition, the HPCF 28b may be defined as a two-system HPCF 28 additionally including a portion of the HPCF 28 in the other division of the ECCS 12A.

The transient mitigation control device 48C periodically reads the water level signal outputted by the water level gauge 46, and controls the transient mitigation system 1C in accordance with a change in the water level of the reactor water in the reactor pressure vessel 4. Specifically, when the water level of the reactor water in the reactor pressure vessel 4 decreases to the reactor water level LOW (level 2), the transient mitigation control device 48C starts timing. In addition, when the elapse of the predetermined time is detected during the timing, the transient mitigation control device 48C activates the HPCF pump 27b, and opens the flooder valve 45b, to thereby inject the cooling water into the reactor pressure vessel 4. Further, when the water level of the reactor water in the reactor pressure vessel 4 recovers to the reactor water level LOW (level 2), the transient mitigation control device 48C stops the HPCF pump 27b, and closes the flooder valve 45b.

Here, the predetermined time is set in advance to such time that can secure a water level slightly above a design-target water level that is obtained by adding a design-margin water level to a water level from the reactor water level LOW (level 2) to the reactor water level LOW (level 1.5), in the case where all feed-water to the reactor pressure vessel 4 is lost in a reactor transient event.

The transient mitigation system 1C thus configured causes the HPCF 28b to inject water into the reactor pressure vessel 4, as a backup of the HPCF 28a that is supposed to be activated at the reactor water level LOW (level 2) in a reactor transient event, and thus recovers the water level of the reactor water in the reactor pressure vessel 4.

Accordingly, in the transient mitigation system 1C according to the present embodiment, even if the activation of the HPCF 28a is failed due to some sort of breakdown or the like, when the predetermined time elapses, the HPCF 28b injects water into the reactor pressure vessel 4. Hence, the water level in the reactor pressure vessel 4 is maintained at a water level higher than the reactor water level LOW (level 1), and the safety of the ABWR 2A is thus enhanced, so that the reactor transient event can be dealt with.

In addition, in the transient mitigation system 1C according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Fifth Embodiment]

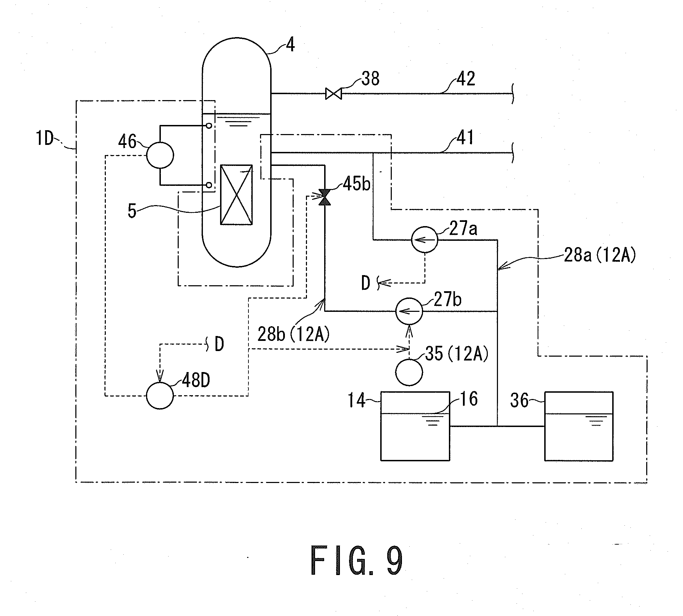

A fifth embodiment of the transient mitigation system for a reactor according to the present invention is described with reference to Fig. 9.

Fig. 9 is a system diagram schematically illustrating the fifth embodiment of the transient mitigation system for a reactor according to the present invention.

Note that, in a transient mitigation system 1D for a reactor according to the present embodiment, the same components as those of the transient mitigation system 1A for a reactor according to the second embodiment are denoted by the same reference symbols, and redundant description is omitted.

As illustrated in Fig. 9, the transient mitigation system 1D for a reactor according to the present embodiment (hereinafter, simply referred to as "transient mitigation system 1D") deals with a reactor transient event using the HPCF 28 and the emergency diesel generator 35 of the ECCS 12A, and maintains the water level of the reactor water (cooling water) in the reactor pressure vessel 4. The transient mitigation system 1D includes: the HPCF 28a (first high pressure flooder system); a transient mitigation control device 48D (timer); and the HPCF 28b (second high pressure flooder system). When the water level of the reactor water in the reactor pressure vessel 4 decreases to the reactor water level LOW (level 2), the HPCF 28a is activated to inject the cooling water into the reactor pressure vessel 4. When the activation of the HPCF 28a is failed, the transient mitigation control device 48D starts timing. When the transient mitigation control device 48D detects the elapse of a predetermined time during the timing, the HPCF 28b is activated to inject the cooling water into the reactor pressure vessel 4.

Note that the HPCF 28a and the HPCF 28b of the transient mitigation system 1D are defined by assigning portions of the HPCF 28 in two divisions (any two of the division 1, the division 2, and the division 3) selected in advance from the ECCS 12A. In addition, the HPCF 28b may be defined as a two-system HPCF 28 additionally including a portion of the HPCF 28 in the other division of the ECCS 12A.

The transient mitigation control device 48D periodically reads an activation command signal inputted to the HPCF 28a (more specifically, the HPCF pump 27a), and controls the transient mitigation system 1D in accordance with a change in the state of the HPCF 28a. Specifically, when the activation of the HPCF 28a is failed, the transient mitigation control device 48D starts timing. In addition, when the elapse of the predetermined time is detected during the timing, the transient mitigation control portion 48D activates the HPCF pump 27b, and opens the flooder valve 45b, to thereby inject the cooling water into the reactor pressure vessel 4. Further, when the water level of the reactor water in the reactor pressure vessel 4 recovers to the reactor water level LOW (level 2), the transient mitigation control device 48D stops the HPCF pump 27b, and closes the flooder valve 45b.

In addition, after reading the activation command signal inputted to the HPCF 28a, the transient mitigation control device 48D monitors a flow meter (omitted from the drawings) and a pressure gauge (omitted from the drawings) that are provided to the HPCF 28a, the number of revolutions of the HPCF pump 27a, and the like, to thereby determine whether or not the activation of the HPCF 28a is failed.

Note that the predetermined time is set in advance by subtracting the time required for the determination of the activation failure of the HPCF 28a from such time that can secure a water level slightly above a design-target water level that is obtained by adding a design-margin water level to a water level from the reactor water level LOW (level 2) to the reactor water level LOW (level 1.5), in the case where all feed-water to the reactor pressure vessel 4 is lost in a reactor transient event.

The transient mitigation system 1D thus configured causes the HPCF 28b to inject water into the reactor pressure vessel 4, as a backup of the HPCF 28a that is supposed to be activated at the reactor water level LOW (level 2) in a reactor transient event, and thus recovers the water level of the reactor water in the reactor pressure vessel 4.

Accordingly, in the transient mitigation system 1D according to the present embodiment, even if the activation of the HPCF 28a is failed due to some sort of breakdown or the like, when the predetermined time elapses, the HPCF 28b injects water into the reactor pressure vessel 4. Hence, the water level in the reactor pressure vessel 4 is maintained at a water level higher than the reactor water level LOW (level 1), and the safety of the ABWR 2A is thus enhanced, so that the reactor transient event can be dealt with.

In addition, in the transient mitigation system 1D according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Sixth Embodiment]

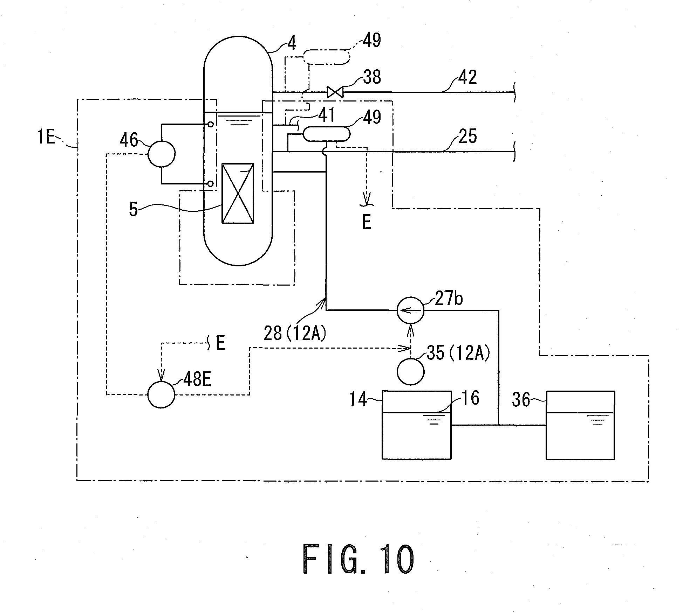

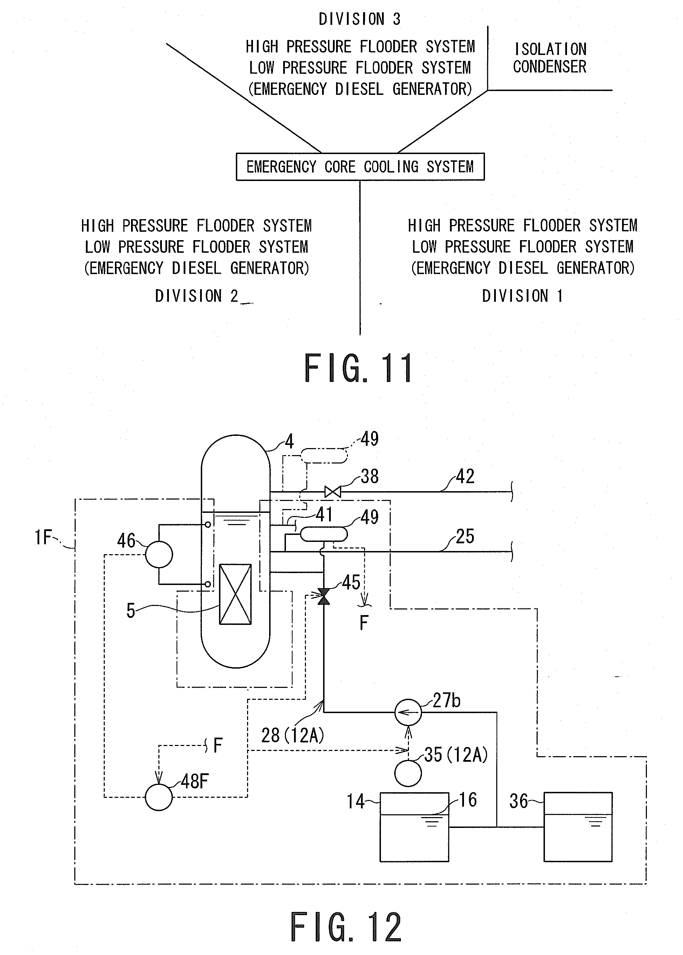

A sixth embodiment of the transient mitigation system for a reactor according to the present invention is described with reference to Fig. 10 and Fig. 11.

Fig. 10 is a system diagram schematically illustrating the sixth embodiment of the transient mitigation system for a reactor according to the present invention.

Fig. 11 is a diagram for describing an ECCS network of an ABWR including the sixth embodiment of the transient mitigation system for a reactor according to the present invention.

Note that, in a transient mitigation system 1E for a reactor according to the present embodiment, the same components as those of the transient mitigation system 1A for a reactor according to the second embodiment are denoted by the same reference symbols, and redundant description is omitted.

As illustrated in Fig. 10 and Fig. 11, the transient mitigation system 1E for a reactor according to the present embodiment (hereinafter, simply referred to as "transient mitigation system 1E") deals with a reactor transient event using an isolation condenser (IC) 49 as well as the HPCF 28 and the emergency diesel generator 35 of the ECCS 12A, and maintains the water level of the reactor water (cooling water) in the reactor pressure vessel 4. The transient mitigation system 1E includes the IC 49 in addition to the components of the transient mitigation system 1A. When the reactor pressure vessel 4 is isolated, the IC 49 takes steam out of the reactor pressure vessel 4, condenses the steam, and injects the condensed water into the reactor pressure vessel 4. In the case where the IC 49 is activated, the transient mitigation system 1E stands by for the start of the water injection of the HPCF 28 until the water level in the reactor pressure vessel 4 decreases to the reactor water level LOW (level 1.5, the second predetermined water level) lower than the reactor water level LOW (level 2, the first predetermined water level). In other words, if the reactor pressure vessel 4 is isolated in a reactor transient event, the transient mitigation system 1E causes the IC 49 to inject water into the reactor pressure vessel 4. Further, when the water level of the reactor water in the reactor pressure vessel 4 decreases to reach the reactor water level LOW (level 1.5), the transient mitigation system 1E activates the HPCF pump 27 to cause the HPCF 28 to inject water into the reactor pressure vessel 4. In this way, the transient mitigation system 1E recovers the water level of the reactor water in the reactor pressure vessel 4. On the other hand, if the reactor pressure vessel 4 is not isolated in a reactor transient event, when the water level of the reactor water in the reactor pressure vessel 4 decreases to reach the reactor water level LOW (level 2), the transient mitigation system 1E activates the HPCF pump 27 to cause the HPCF 28 to inject water into the reactor pressure vessel 4, and thus recovers the water level of the reactor water in the reactor pressure vessel 4. The IC 49 may take steam out of the LPFL 25, and may inject the condensed water into the reactor pressure vessel 4 through the HPCF 28 (in Fig. 10, the IC 49 indicated by a solid line). Alternatively, the IC 49 may take steam out of the main steam pipe 42 located at a position higher than the LPFL 25 and the HPCF 28, and may inject the condensed water into the reactor pressure vessel 4 through the feed-water pipe 41 (in Fig. 10, the IC 49 indicated by a chain double-dashed line).

The transient mitigation system 1E also includes: the water level gauge 46; a transient mitigation control device 48E; and the emergency diesel generator 35. The transient mitigation control device 48E receives the water level signal outputted by the water level gauge 46, and monitors an actuation state of the IC 49. Then, on the basis of the water level signal and the actuation state of the IC 49, the transient mitigation control portion 48E activates or stops the HPCF 28.

The transient mitigation control device 48E periodically reads the water level signal outputted by the water level gauge 46, and monitors whether or not the IC 49 is activated, to thereby control the transient mitigation system 1E. Specifically, in the case where the IC 49 is activated, the transient mitigation control device 48E stands by for the start of the water injection of the HPCF 28 until the water level in the reactor pressure vessel 4 decreases to the reactor water level LOW (level 1.5, the second predetermined water level) lower than the reactor water level LOW (level 2, the first predetermined water level). In other words, if the IC 49 is activated, even when the water level of the reactor water in the reactor pressure vessel 4 decreases to the reactor water level LOW (level 2), the transient mitigation control device 48E stands by for the start of the water injection of the HPCF 28. Then, when the water level of the reactor water in the reactor pressure vessel 4 further decreases to reach the reactor water level LOW (level 1.5), the transient mitigation control device 48E activates the HPCF pump 27 to cause the HPCF 28 to inject water into the reactor pressure vessel 4. In this way, the transient mitigation control device 48E recovers the water level of the reactor water in the reactor pressure vessel 4. On the other hand, if the IC 49 is not activated, when the water level of the reactor water in the reactor pressure vessel 4 decreases to reach the reactor water level LOW (level 2), the transient mitigation control device 48E activates the HPCF pump 27 to cause the HPCF 28 to inject water into the reactor pressure vessel 4, and thus recovers the water level of the reactor water in the reactor pressure vessel 4.

In addition, the transient mitigation control device 48E monitors a flow meter (omitted from the drawings) and a pressure gauge (omitted from the drawings) that are provided to the IC 49, an opening/closing state of the main steam isolation valve 38, and the like, to thereby determine whether or not the IC 49 is activated.

When the reactor pressure vessel 4 is isolated in a reactor transient event, the transient mitigation system 1E thus configured causes the IC 49 to inject water into the reactor pressure vessel 4, and thus recovers the water level of the reactor water in the reactor pressure vessel 4. On the other hand, when the reactor pressure vessel 4 is not isolated in a reactor transient event, the transient mitigation system 1E causes the HPCF 28 to inject water into the reactor pressure vessel 4, and thus recovers the water level of the reactor water in the reactor pressure vessel 4.

Accordingly, in the transient mitigation system 1E according to the present embodiment, if the reactor pressure vessel 4 is isolated, the IC 49 injects water into the reactor pressure vessel 4, whereas if the reactor pressure vessel 4 is not isolated, the HPCF 28 injects water into the reactor pressure vessel 4. Hence, the water level in the reactor pressure vessel 4 is maintained at a water level higher than the reactor water level LOW (level 1), and the safety of the ABWR 2A is thus enhanced, so that the reactor transient event can be dealt with.

In addition, in the transient mitigation system 1E according to the present embodiment, the IC 49 and the HPCF 28 do not inject water at the same time, and the water is not excessively injected into the reactor pressure vessel 4. Hence, a burden on an operator of the ABWR 2A can be reduced.

Further, in the transient mitigation system 1E according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

### [Seventh Embodiment]

A seventh embodiment of the transient mitigation system for a reactor according to the present invention is described with reference to Fig. 12.

Fig. 12 is a system diagram schematically illustrating the seventh embodiment of the transient mitigation system for a reactor according to the present invention.

Note that, in a transient mitigation system 1F for a reactor according to the present embodiment, the same components as those of the transient mitigation system 1E for a reactor according to the sixth embodiment are denoted by the same reference symbols, and redundant description is omitted.

As illustrated in Fig. 12, in the case where the IC 49 is activated, the transient mitigation system 1F for a reactor according to the present embodiment (hereinafter, simply referred to as "transient mitigation system 1F") maintains a stop state of the HPCF 28 until the water level in the reactor pressure vessel 4 decreases to the reactor water level LOW (level 1.5) lower than the reactor water level LOW (level 2). In other words, if the reactor pressure vessel 4 is isolated in a reactor transient event, the transient mitigation system 1F causes the IC 49 to inject water into the reactor pressure vessel 4, and thus recovers the water level of the reactor water in the reactor pressure vessel 4. Further, when the water level in the reactor pressure vessel 4 decreases to the reactor water level LOW (level 1.5) lower than the reactor water level LOW (level 2), the transient mitigation system 1F activates the HPCF pump 27 to cause the HPCF 28 to inject water into the reactor pressure vessel 4, and thus recovers the water level of the reactor water in the reactor pressure vessel 4. On the other hand, if the reactor pressure vessel 4 is not isolated in a reactor transient event, when the water level of the reactor water in the reactor pressure vessel 4 decreases to reach the reactor water level LOW (level 2), the transient mitigation system 1F activates the HPCF pump 27 to cause the HPCF 28 to inject water into the reactor pressure vessel 4, and thus recovers the water level of the reactor water in the reactor pressure vessel 4.

The transient mitigation system 1F includes: the water level gauge 46; a transient mitigation control device 48F; and the emergency diesel generator 35. The transient mitigation control device 48F receives the water level signal outputted by the water level gauge 46, and monitors an actuation state of the IC 49. Then, on the basis of the water level signal and the actuation state of the IC 49, the transient mitigation control device 48F activates or stops the HPCF 28.

The transient mitigation control device 48F periodically reads the water level signal outputted by the water level gauge 46, and monitors whether or not the IC 49 is activated, to thereby control the transient mitigation system 1F. Specifically, in the case where the IC 49 is activated, the transient mitigation control device 48F maintains the HPCF 28 in a stop state. In other words, if the IC 49 is activated, the transient mitigation control device 48F maintains the HPCF 28 in the stop state, causes the IC 49 to inject water into the reactor pressure vessel 4, and thus recovers the water level of the reactor water in the reactor pressure vessel 4. Further, when the water level in the reactor pressure vessel 4 decreases to the reactor water level LOW (level 1.5) lower than the reactor water level LOW (level 2), the transient mitigation control device 48F activates the HPCF pump 27 to cause the HPCF 28 to inject water into the reactor pressure vessel 4, and thus recovers the water level of the reactor water in the reactor pressure vessel 4. On the other hand, if the IC 49 is not activated, when the water level of the reactor water in the reactor pressure vessel 4 decreases to reach the reactor water level LOW (level 2), the transient mitigation control device 48F activates the HPCF pump 27 to cause the HPCF 28 to inject water into the reactor pressure vessel 4, and thus recovers the water level of the reactor water in the reactor pressure vessel 4. Similarly to the transient mitigation system 1E, also in the transient mitigation system 1F, the IC 49 may take steam out of the LPFL 25, and may inject the condensed water into the reactor pressure vessel 4 through the HPCF 28 (in Fig. 12, the IC 49 indicated by a solid line). Alternatively, the IC 49 may take steam out of the main steam pipe 42 located at a position higher than the LPFL 25 and the HPCF 28, and may inject the condensed water into the reactor pressure vessel 4 through the feed-water pipe 41 (in Fig. 12, the IC 49 indicated by a chain double-dashed line).

Note that, in the case where the IC 49 is activated, when the water level in the reactor pressure vessel 4 decreases to the reactor water level LOW (level 2), the transient mitigation control device 48F may activate the HPCF pump 27. Further, when the water level of the reactor water in the reactor pressure vessel 4 decreases to the reactor water level LOW (level 1.5), the transient mitigation control device 48F may open the flooder valve 45 to inject the cooling water into the reactor pressure vessel 4.

In addition, the transient mitigation control device 48F monitors a flow meter (omitted from the drawings) and a pressure gauge (omitted from the drawings) that are provided to the IC 49, an opening/closing state of the main steam isolation valve 38, and the like, to thereby determine whether or not the IC 49 is activated.

When the reactor pressure vessel 4 is isolated in a reactor transient event, the transient mitigation system 1F thus configured causes the IC 49 to inject water into the reactor pressure vessel 4, and thus recovers the water level of the reactor water in the reactor pressure vessel 4. On the other hand, when the reactor pressure vessel 4 is not isolated in a reactor transient event, the transient mitigation system 1F causes the HPCF 28 to inject water into the reactor pressure vessel 4, and thus recovers the water level of the reactor water in the reactor pressure vessel 4.

Accordingly, in the transient mitigation system 1F according to the present embodiment, if the reactor pressure vessel 4 is isolated, the IC 49 injects water into the reactor pressure vessel 4, whereas if the reactor pressure vessel 4 is not isolated, the HPCF 28 injects water into the reactor pressure vessel 4. Hence, the water level in the reactor pressure vessel 4 is maintained at a water level higher than the reactor water level LOW (level 1), and the safety of the ABWR 2A is thus enhanced, so that the reactor transient event can be dealt with.

In addition, in the transient mitigation system 1F according to the present embodiment, the IC 49 and the HPCF 28 do not inject water at the same time, and the water is not excessively injected into the reactor pressure vessel 4. Hence, a burden on an operator of the ABWR 2A can be reduced.

Further, in the transient mitigation system 1F according to the present embodiment, the water level in the reactor pressure vessel 4 can be maintained without activating the LPFL 25 (activation water level: level 1), and the pool water in the pressure suppression pool 16 can avoid being injected into the reactor pressure vessel 4.

Accordingly, the transient mitigation system 1, 1A, 1B, 1C, 1D, 1E, 1F for a reactor according to the present invention can keep, in a reactor transient event, the inside of the reactor pressure vessel 4 at a safe water level to thereby reliably cool the reactor core 5.

### Description of Symbols

1, 1A, 1B, 1C, 1D, 1E, 1F transient mitigation system
2, 2A advanced boiling water reactor (ABWR)
3 reactor containment vessel (PCV)
4 reactor pressure vessel
5 reactor core
11 coolant recirculation pump
12, 12A emergency core cooling system (ECCS)
13 dry well
14 pressure suppression chamber
16 pressure suppression pool
17 reactor core shroud
18 downcomer
19 reactor core lower plenum
21 main steam system
22 feed-water system
24 low pressure flooder system (LPFL) pump
25 low pressure flooder system (LPFL)
27, 27a, 27b high pressure core flooder system (HPCF) pump
28, 28a, 28b high pressure core flooder system (HPCF)
31 reactor core isolation cooling system (RCIC) pump
32 reactor core isolation cooling system (RCIC)
34 automatic depressurization system
35 emergency diesel generator
36 condensate storage tank
37 sparger nozzle
38 main steam isolation valve
41 feed-water pipe
42 main steam pipe
45, 45b flooder valve
46 water level gauge
48, 48B, 48C, 48D, 48E, 48F transient mitigation control device
49 isolation condenser (IC)

## Claims

1. A transient mitigation system for a reactor, comprising:
a reactor core isolation cooling system that is activated to supply cooling water into the reactor when a water level in the reactor decreases to a first predetermined water level; and
a high pressure flooder system including: a high pressure flooder pump that is activated when the water level in the reactor decreases to the first predetermined water level; and a flooder valve that is opened to inject cooling water into the reactor when the water level in the reactor decreases to a second predetermined water level lower than the first predetermined water level.

2. The transient mitigation system for a reactor according to claim 1, wherein
the high pressure flooder system stops the high pressure flooder pump when the water level in the reactor recovers to a water level higher than the first predetermined water level.

3. A transient mitigation system for a reactor, comprising a first high pressure flooder system that is activated to inject cooling water into the reactor when a water level in the reactor decreases to a first predetermined water level.

4. The transient mitigation system for a reactor according to claim 3, further comprising a second high pressure flooder system including: a high pressure flooder pump that is activated when the water level in the reactor decreases to the first predetermined water level; and a flooder valve that is opened to inject cooling water into the reactor when the water level in the reactor decreases to a second predetermined water level lower than the first predetermined water level.

5. The transient mitigation system for a reactor according to claim 3, further comprising:
a timer that starts timing when the water level in the reactor decreases to the first predetermined water level; and
a second high pressure flooder system that is activated to inject cooling water into the reactor when the timer detects an elapse of a predetermined time during the timing.

6. The transient mitigation system for a reactor according to claim 3, further comprising:
a timer that starts timing when the activation of the first high pressure flooder system is failed; and
a second high pressure flooder system that is activated to inject cooling water into the reactor when the timer detects an elapse of a predetermined time during the timing.

7. The transient mitigation system for a reactor according to claim 3, further comprising an isolation condenser that takes steam out of the reactor, condenses the steam, and injects the condensed water into the reactor, when the reactor is isolated, wherein
the first high pressure flooder system stands by, if the isolation condenser is activated, for a start of the water injection until the water level in the reactor decreases to a second predetermined water level lower than the first predetermined water level.

8. The transient mitigation system for a reactor according to claim 3, further comprising an isolation condenser that takes steam out of the reactor, condenses the steam, and injects the condensed water into the reactor, when the reactor is isolated, wherein
the first high pressure flooder system remains in a stop state thereof if the isolation condenser is activated.
